# EUROPEAN PATENT APPLICATION

(11) **EP 2 075 748 A1**
(43) Date of publication of application: **01.07.2009**
(21) Application number: 08171859.5
(22) Date of filing: 16.12.2008
(51) Int. Cl.: G06Q 10/00

(54) **System and method for creating a database**

(30) Priority: 18.12.2007 GB 0724575; 07.02.2008 GB 0802188
(71) Applicant: Triad Group PLC, Milton Keynes Buckinghamshire MK7 8LE (GB)
(72) Inventor: Oates, Julian, West Haddon, Northamptonshire NN6 7AF (GB); Haynes, Ian, Pitsford, Northamptonshire NN6 9AR (GB); Bugby, Christopher, Staithes, Cleveland TS13 5BQ (GB)
(74) Representative: Turner, Richard Charles

(57) **Abstract**

A method of creating a database comprises receiving a document file comprising a curriculum vitae or a job advertisement, performing semantic extraction on the document file, extracting a plurality of components from the document file, accessing a data matrix, the data matrix defining a plurality of standardised entries, translating each extracted component into a standardised entry from the data matrix, and storing the translated standardised entries in a data file.

## Description

This invention relates to a system for and a method of creating a database.

It is known to provide recruitment services via the Internet. Specific vacancies are listed on websites such as www.monster.co.uk, which allow job seekers to search for vacancies using keywords, categories (such as "sales"), and/or location (such as a city name or postcode). However, existing websites do not provide a good enough service to either the job seeker or the company with the vacancy, because the use of keyword searching is highly dependent on the choices made both by the job seeker and the original author of the job vacancy, there is no possibility of the automated matching of job seekers to job vacancies, and there is no possibility of extracting usable and valuable data from the information held by such online services.

It is therefore an object of the invention to improve upon the known art. According to a first aspect of the present invention, there is provided a method of creating a database comprising receiving a document file comprising a curriculum vitae or a job advertisement, performing semantic extraction on the document file, extracting a plurality of components from the document file, accessing a data matrix, the data matrix defining a plurality of standardised entries, translating each extracted component into a standardised entry from the data matrix, and storing the translated standardised entries in a data file.

According to a second aspect of the present invention, there is provided a system for creating a database comprising an interface arranged to receive a document file comprising a curriculum vitae or a job advertisement, a processor arranged to perform semantic extraction on the document file, extracting a plurality of components from the document file, to access a data matrix, the data matrix defining a plurality of standardised entries, and to translate each extracted component into a standardised entry from the data matrix, and a database arranged to store the translated standardised entries in a data file.

According to a third aspect of the present invention, there is provided a computer program product on a computer readable medium for creating a database, the product comprising instructions for receiving a document file comprising a curriculum vitae or a job advertisement, performing semantic extraction on the document file, extracting a plurality of components from the document file, accessing a data matrix, the data matrix defining a plurality of standardised entries, translating each extracted component into a standardised entry from the data matrix, and storing the translated standardised entries in a data file.

Owing to the invention, it is possible to create a database of data files, each data file representing either a curriculum vitae or a job advertisement, which supports efficient operation of tasks such as the matching of the data files, and/or the extraction of data from the data files. The process performs semantic extraction on the original document and the extracted components are translated into standardised entries in a data file. For example, extracted components such as "HR", "human resources", "personnel" may all be translated into a standard entry such as "HR".

The method can further comprise receiving a user input corresponding to a standardised entry in the data matrix and displaying one or more representations of data files that include the received standardised entry, and can also comprise receiving a second user input corresponding to a location component, and displaying one or more representations of data files that include the received location component. The data files within the database can be searched using the terms recorded within the data files, and the output of any search can be represented graphically according to location.

Curriculum Vitae (CVs) and Job Advertisements contain valuable information. In an obvious sense, the CV contains information about a worker and a job advertisement contains information about a job vacancy. If it were possible to intelligently extract this data, it would be possible to try and create a match between CV and vacancy. This invention provides a system which uses Semantic technology to intelligently extract data from CVs and job advertisements. This includes not just technology based skills (i.e. "hard" skills) but includes more complex constructions such as:
- Career history (employer, branch location, dates, job titles)
- Academic level (e.g. Postgraduate, graduate, non graduate)
- Qualifications & Professional Memberships
- Technology skills and length of experience
- Potential competencies (soft skills, work styles and task) and examples of those competencies
- Examples of project work undertaken
- Personal Profile

In a less obvious sense, a CV contains information about companies, the technologies they have used, the projects they have undertaken and the tasks they have addressed. Similarly, a job vacancy provides insights into the challenges facing an organisation. If it were possible to intelligently extract this data, it would be possible to build a more detailed picture of the organisation than might ordinarily be available.

Gathered over time and taken together, this information about companies and individuals can be presented in novel ways. For instance:
- Organisations can see the geographic distribution and density of technology skills availability across a territory, which might be of particular value if it were considering relocation or the introduction of a new technology.
- Workers can see the geographic distribution and density of technology skills usage across a territory, which is useful if you are looking to change employment or relocate.
- Workers can see examples of work undertaken at a particular company for a chosen technology.
- Workers can see historic job advertisements at a chosen company and for a chosen technology.
   The inventive system of this application covers the intelligent data extraction from CVs and Job Advertisements, the use of information contained within CVs to create information about companies and the display of this data showing its geographic distribution and density.
The extraction of data from a CV may comprise extracting one or more of the following elements:
a) Name, address, postcode, telephone numbers and email address
b) The Personal profile where it exists
c) Academic Qualification and Highest academic qualification
d) Vocational Qualifications
e) Professional Memberships
f) Previous employers with start date, end date and job title
g) Technology skills
h) Length of usage of technology skill calculated from employment dates (and the last date they were referenced)
i) Industry sector experience
j) Seniority and discipline based on job title
k) Competencies (soft skills, work style and task)
l) Examples of competencies
m) The number of occurrences of each competence
n) Examples of project work Similarly, the extraction of data from a Job Advertisement, may comprise extraction of one or more of the following elements:
o) Name, address, postcode, telephone numbers and email address (where exist) of job vacancy contact
p) Highest academic qualification required
q) Vocational Qualifications required
r) Professional Memberships required
s) Technology skills required
t) Length of usage of technology skill required
u) Industry sector experience
v) Seniority based on job type
w) Competencies (soft skills, work style and task)
x) Examples of project work required The use of the extracted data from CVs may be used to create information about companies, display the geographic distribution of the skills used by organisations, display the geographic density of the skills used by organisations, display the geographic distribution of skills available from workers, and to display the geographic density of skills available from workers. Likewise, the use of the extracted data from Job Advertisements may be used to create a history of technology skills need, display examples of previous need to potential employees, display the geographic distribution of current vacancies for a chosen technology, display the geographic distribution of historic vacancies for a chosen technology, display the geographic density of current vacancies for a chosen technology, and to display the geographic density of historic vacancies for a chosen technology.

Embodiments of the present invention will now be described, by way of example only, with reference to the accompanying drawings, in which:-
Figure 1 is a schematic diagram of a network of computers and a server,
Figure 2 is a schematic diagram of the server of Figure 1,
Figure 3 is a schematic diagram of a document file,
Figure 4 is a flowchart of a method of creating a database,
Figure 5 is a schematic diagram of a graphical user interface,
Figure 6 is a schematic diagram of a graphical user interface showing a heat map,
Figure 7 is a schematic diagram showing steps in an extraction process,
Figure 8 is a schematic diagram showing examples of data to be extracted from a CV, and
Figure 9 is a schematic diagram showing examples of data to be extracted from a job advertisement.

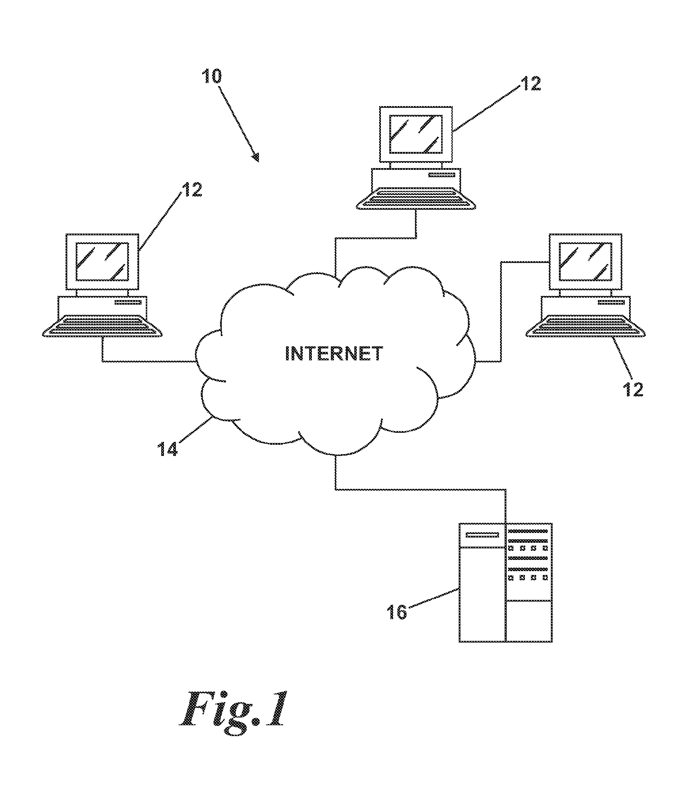

Figure 1 shows a network 10 that comprises various client devices 12 (conventional computers) connected through the Internet 14 to a server 16. The client devices 12 are used by job seekers and companies with vacancies to access the services provided by the server 16. The example embodiment of Figure 1 shows a public network, but the server 16 and client devices 12 could also be implemented in other ways, for example as a private network within a large company that wishes to manages its recruitment process using the functions provided by the server 16. In this case a private Intranet could be used rather than the Internet.

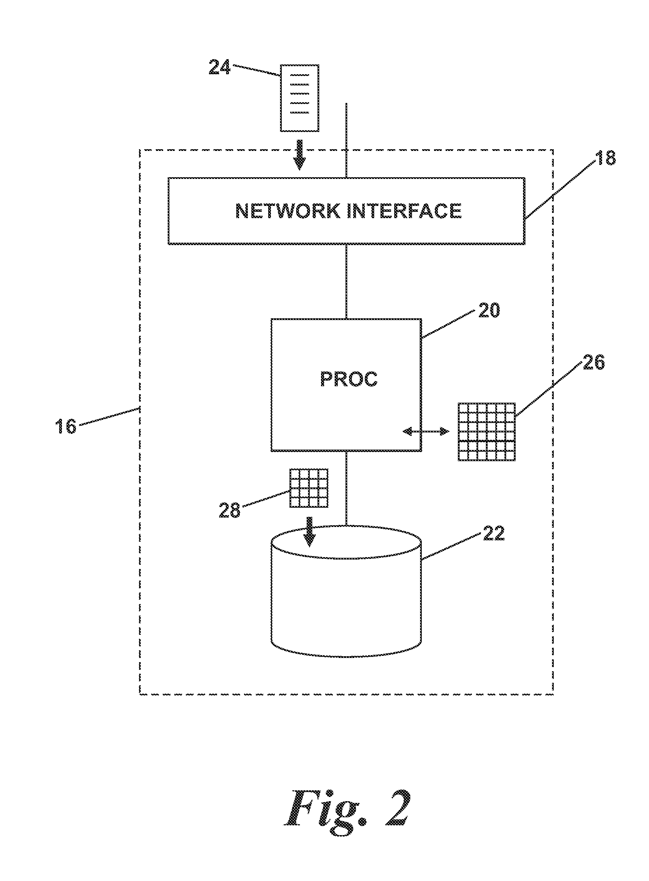

The server 16 provides semantic information extraction from CVs and job advertisements. The system provided by the server 16 is shown in more detail in Figure 2. The system comprises a network interface 18, a processor 20 and a database 22. The interface 18 is arranged to receive a document file 24, which comprises either a curriculum vitae or a job advertisement. The processor 20 is arranged to perform semantic extraction on the document file 24 and extracting a plurality of components from the document file 24. The processor 20 has access to a data matrix 26, the data matrix 26 defining a plurality of standardised entries, and the processor 20 translates each extracted component into a standardised entry from the data matrix 26. The database 22 is arranged to store the translated standardised entries in a data file 28. In this way the document file 24 (CV or advert) is translated into a more usable data file 28.

The system 16, in one embodiment, is a web based software application that facilitates individuals and organisations expressing their employment needs. Its objective is to create a match between an employer's job vacancy and worker's profile (capabilities as expressed in their curriculum vitae (CV) and other needs such as salary) that will lead to employment.

Other systems in this area rely upon manual entry of search criteria by either party. These criteria might be skill set, salary and location. Matching in these systems is limited to these criteria.

Information Extraction from CVs and job advertisements is complex, as these documents comprise unstructured (or semi-structured) text, in multiple formats. The system 16 uses semantic technology to extract comprehensive details from a CV and job advertisement.

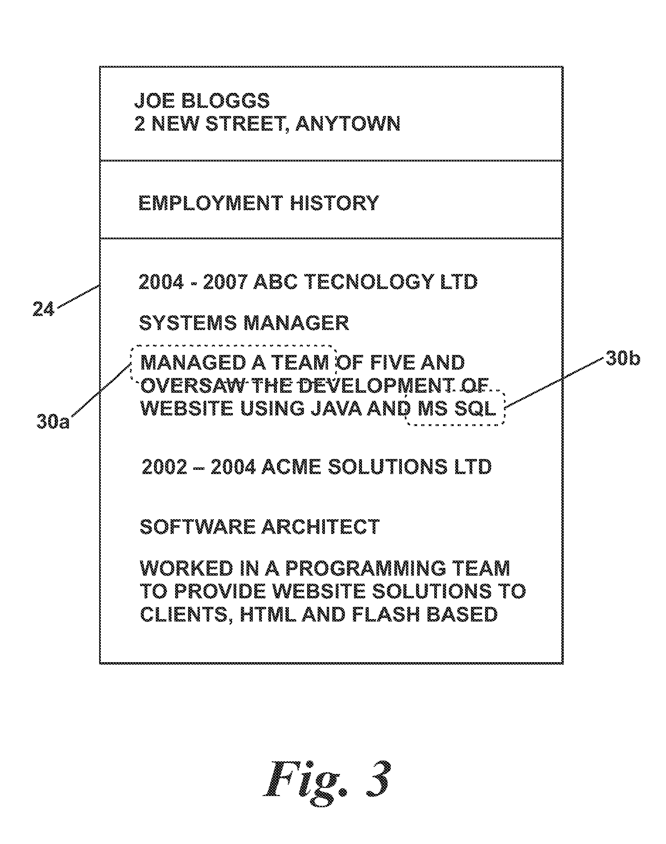

Figure 3 shows an example of a document file 24, being the CV of a fictional "Joe Bloggs". It should be understood that a real CV will be much more detailed than the example shown in Figure 3, but the document file 24 is shown to illustrate the concepts involved in the semantic extraction and generation of the data file 28 that corresponds to the original text file 24. Two components 30a and 30b are highlighted within the CV 24. These components 30 are examples of the plurality of components 30 that are extracted by the processor 20 during the semantic extraction process.

The two components 30 highlighted in the Figure are just two examples of the components 30 that would be extracted from the document file 24 of Figure 3, other components 30 would also be extracted, but these two are highlighted for explanation purposes. The extraction process is a semantic extraction not just a simple word search. For example, the component 30a "managed a team" has a different meaning from "worked in a ... team", and the processor 20 is able to semantically extract components 30 from the document file 24 that maintains their meaning in context. The component 30b "MS SQL" is identified as a skill that the individual has, again through the semantic use of the term.

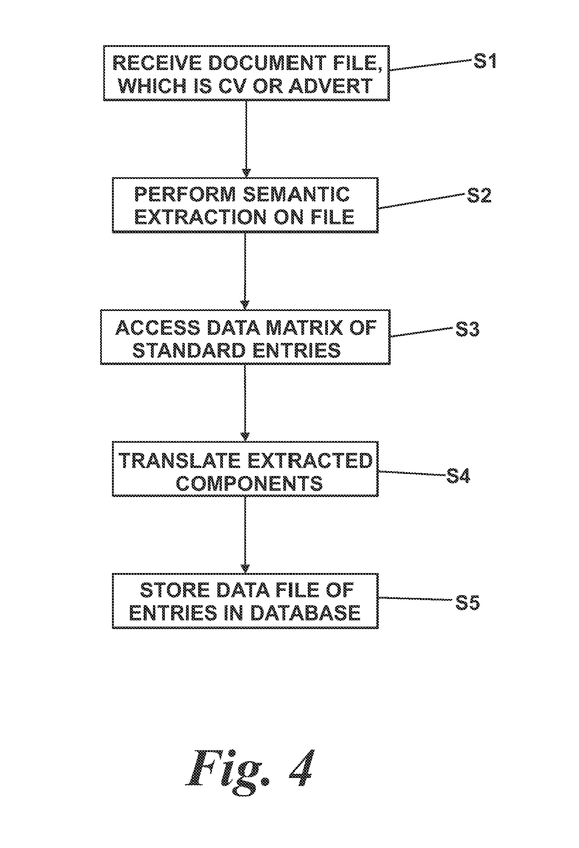

The components 30 themselves are then translated into standardised entries that are used to make up the data file 28. Many similar expressions such as "lead a team" could be similar to the component 30a, and the translation phase executed by the processor 20 matches the components 30 to entries in the data matrix 26. The standard entry might be "TEAM LEADER". This process of translation is performed for all of the components extracted from the document file 24. The process of handling the document files is summarised in Figure 4.

Figure 4 shows a flowchart of the method of creating the database 22. The method comprises, step S1, receiving the document file 24 comprising the curriculum vitae or job advertisement, step S2, performing semantic extraction on the document file 24, which extracts the plurality of components 30 from the document file 24, step S3, accessing the data matrix 26 defining a plurality of standardised entries, step S4, translating each extracted component into a standardised entry from the data matrix 26, and finally, at step S5, storing the translated standardised entries in the data file 28. Each CV or job advert is processed in this way and results in a data file 28 being stored in the database 22. The method can also further comprise extracting a location component (such as a postcode) from the document file 24 and storing the location component in the data file 28.

Once the data files 28 are created within the database 22, the process can further comprise matching at least one of the standardised entries of a first data file to at least one of the standardised entries of a second data file. In addition, this matching can further comprise matching the location component of the first data file to the location component of the second data file. This enables automated matching to be undertaken with closer results than manual free text searching. This data includes:

| **Curriculum Vitae** | **Job Advertisements** |
|---|---|
| Contact Details | Contact Details |
| Personal Profile | Company Profile |
| Academic Qualifications | Academic Requirements |
| Vocational Qualifications | Vocational Qualification Requirements |
| Professional Memberships | Professional Membership requirements |
| Technology Skills (and length of experience) | Technology Skill Requirements |
| Previous Employers with Jobtitles (and dates of employment, technologies used in each employment) | Advertised Job Title Possible length of experience in technologies |
| Industry Sector Experience | Previous Industry Sector Experience |
| Seniority | Seniority of Role |
| Competencies | Competence Requirements |
| Project Examples | Projects Required |

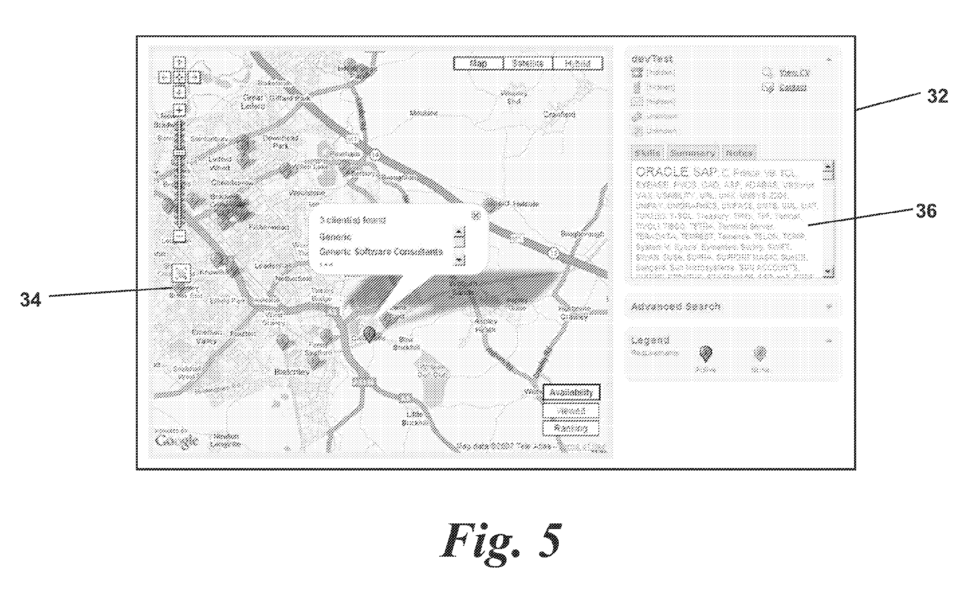

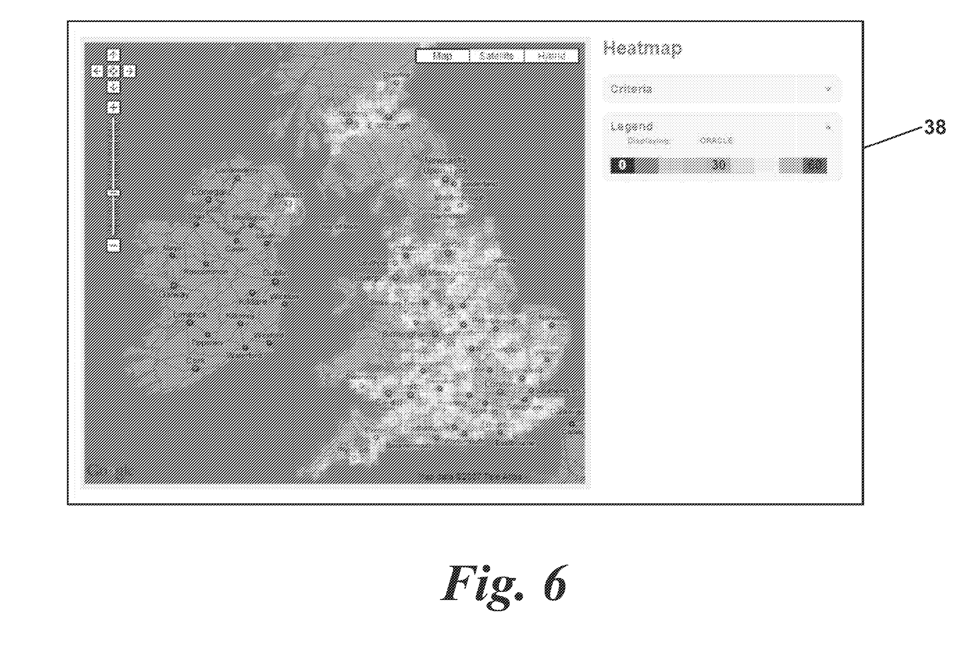

The semantic extraction enables the server 16 to collect a uniquely rich set of data from the CVs. In additional to the information about the owner of the CV, it is able to build a database of "employing organisations" and a list of technologies used by these organisations. This data is then used to build two geographic displays:
- ***A Technology Map:***: Showing each company and location, with the technology used, as shown in Figure 5. This Figure shows the technology map 32 with pointers 34 marking the location of employers. A skills window 36 shows the skills used at the specific employer for any selected pointer 34. The technology map 32 is generated from the data extracted from CVs.
- ***A Heat Map:***: Showing the "density" of a selected technology (for individuals or organisations) across a selected territory, at a selected resolution. For instance, given a selected technology (e.g. Oracle), the map will show, through graduated colour coding, the density (i.e. numbers of occurrences) of the specific skill, see the example of Figure 6. A heat map 38 is generated, which is colour coded to show the number of potential employees for a selected technology.

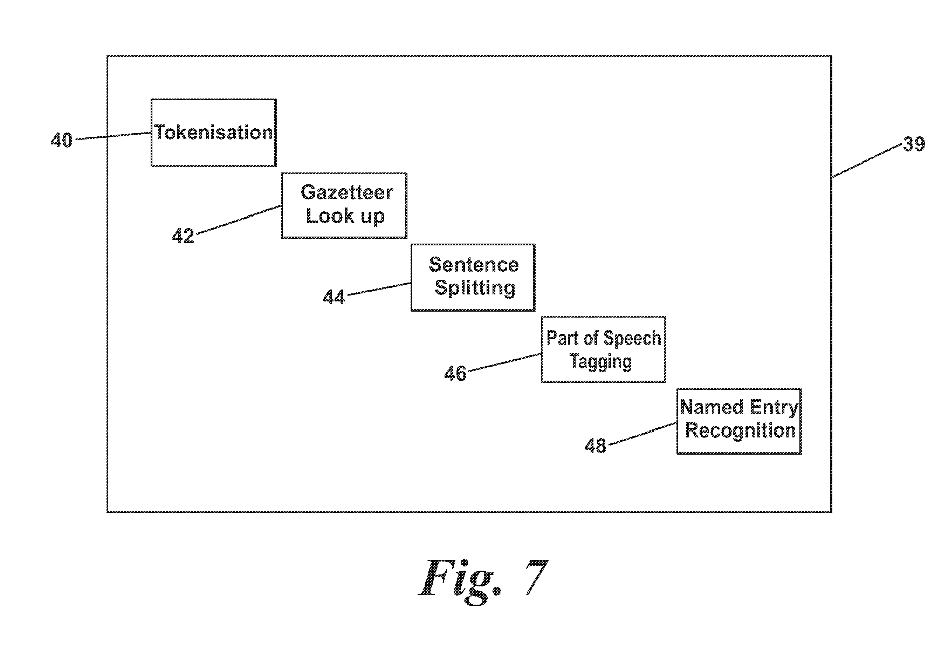

The system 16 uses a Semantic Engine 39, as described above, to pre-process the CVs and job advertisements before information extraction is undertaken, one embodiment of which is shown in Figure 7. This preprocessing includes tokenisation 40, gazetteer look up 42, sentence splitting 44, parts of speech tagging 46 and named entity recognition 48. This annotates the document file 24 with the pre-processed information and provides a foundation for information extraction. User defined rules, often using pattern matching, then identify and disambiguate the information before extracting it.

### Definitions

As some terms are used frequently in this document, they are described in more detail below:

| **Concept** | **Description** |
|---|---|
| ***Tokenisation*** | Refers to the process of isolating each constituent word, space, punctuation mark and labelling it, in order that later stages of processing can use the information |
| ***Gazetteer*** | At its simplest, a gazetteer is a look up table. However, if gazetteers have attributes associated with them, a structured set of gazetteers can perform the function of a simple ontology |
| ***Ontology*** | A data structure able to hold data and the relationships between data. For instance, a "teacher" might be represented as a "type" or "sub-class" of "worker". If John is a teacher, he would also inherit the attribute of worker. |
| ***Sentence Splitting*** | Refers to the process of segmenting the text into separate sentences and labelling it for use in later processing. |
| ***Part of Speech Tagging*** | Refers to the process of labelling each word to identify the type of word (i.e. verb, noun, adjective, adverb etc and the tense) |
| ***Stemmed Terms*** | Refers to all forms of word resulting from different tenses (e.g. undertake, undertakes, undertook, undertaking) |
| ***Annotation*** | Means labelling the token in the document, indicating a fact about the token |
| ***Rules*** | Refers to user written checks or tests. Where a test is positive, some kind of action is performed |
| ***Pattern Matching*** | Refers to the way in which data might be recognised. Addresses often have patterns. For instance: |
| | "12, Gloucester Road" is a typical address pattern. It has a number, followed by a Proper Noun, followed by "street", "road", "avenue" etc. |
| ***Named Entity Recognition*** | Refers to the identification of place names, people, organisations, monetary units etc |
| | Named entity recognition uses rules to look for typical patterns, as shown above with addresses. Where a rule finds a match, it would typically annotate the document with a label stating the token was an address |
| ***Disambiguation*** | Ambiguous words can have multiple meanings. Disambiguation refers to the process of determining which meaning is correct. For instance, the word Gloucester, in the address "12, Gloucester road", could be a place name. However the pattern matching process for addresses would determine that it was actually part of an address. |
| ***Extraction*** | Refers to the process of copying a segment of data or annotation. |

### CV Information Extraction Process Overview

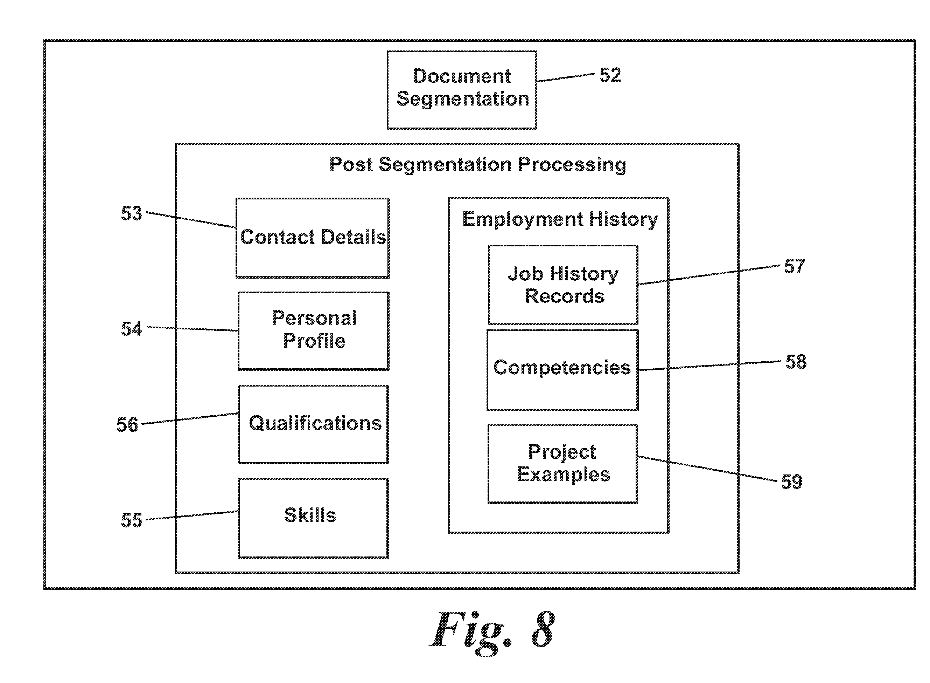

The Information Extraction 50 task is broken down in to a series of processes, as shown in Figure 8, with respect to a CV. Whilst no specific order of processing is required, undertaking the Documentation Segmentation 52 process first simplifies the task and enhances the accuracy.

### Document Segmentation (52)

***Objective:*** To segment the CV in component sections to simplify the disambiguation task. These sections are typically:
- Contact details
- Personal Profile
- Skills
- Qualifications (Academic/Vocational/Professional Memberships)
- Employment History - containing o Job History - Company o Job History - Company etc
- Interests and Hobbies
- References

***Method:*** Sections are detected by identifying section boundaries. Labels (ie Words or phrases) that might indicate section boundaries are placed in gazetteers (one per section boundary), with all reasonable synonyms (eg Personal Profile, Personal Summary, Summary, etc). An additional gazetteer is created that contains words that might be section markers but could equally be contained within the body of text and so would be irrelevant (ie ambiguous words). A "date" gazetteer is required to hold "special format dates" as they appear in CVs, for instance "Present" or "to date". These gazetteers are then used in a series of linked steps. An example of this might be as follows:

***Step 1:*** Find the End of File marker and place annotation

### Mark all major sections

***Step 2*:** Use gazetteer for commonly used words denoting sections (e.g. personal profile, job history etc) and annotate as "possible" section boundaries.

***Step 3*:** Use gazetteer for ambiguous words (such as "experience") and annotate as "possible" section boundaries.

***Step 4*:** Find occurrences of "special format dates" and annotate as employment date and annotate the date nearby as the start date of employment

***Step 5:*** Examine the "possible" section markers (excluding the ambiguous ones) and detect whether these words stand alone (as if it is a heading) or whether they are surrounded by other words (as if it is part of a sentence). If alone, annotate the marker as a section marker of the type indicated by the gazetteer type.

***Step 6*:** Examine each ambiguous "possible" section markers. If it suggests a section that has yet to be found and the phrase is alone (as if it is a heading) further evidence can be sought that it is a real section marker. For example, for the word "experience", it is possible to look for evidence (patterns) of words that suggest it is an employment record (e.g. dates). Where a valid pattern is found, it can be annotated as a section marker of the type indicated by the gazetteer type.

***Step 7*:** Identify missing sections and look for patterns that suggest they exist. If a good match is obtained, annotate accordingly.
**Mark Job History subsections within Employment History**

***Step 8*:** Mark all date entries as "possible" employment dates

***Step 9*:** Review the dates in the Employment History segment from beginning to end, ignoring dates that appear in the text. Annotate the remainder as employment dates.

***Step 10:*** Identify the start of individual job records within the Employment History by identifying companies and job titles found in the proximity of employment dates. Ignore job titles found in other contexts (such as "I worked with a Business Analyst"). Annotate the beginning of each sub section.

**Step 11:** The data can now be extracted. For each information group, the processes for information extraction from a CV are as follows:

### Contact Details (53)

***Objective:*** To extract the name, address, telephone numbers and email address.

***Method:*** Data fields are scrutinised within the Contact Details Section, then detected as follows:

| **Section** | **Method** |
|---|---|
| ***FirstName*** | Pattern recognition, named entity recognition in pre-processing. In addition, CV owner's name is most likely to be the first name encountered or last name encountered (if not part of the references) |
| ***LastName*** | As above |
| ***Address Line 1*** | Pattern recognition using standard forms such as: |
| ***Address Line 2*** | < Number > < "," > < Proper Noun > < Street/ road etc > |
| ***Address Line 3*** | Proximity of a post code is also significant. Address lines can be separated by looking for a "comma" punctuation mark, or a line break |
| ***Postcode*** | Pattern recognition of post code form |
| ***Telephone Number (Landline)*** | Pattern recognition of telephone format, excluding mobile phone formats (for instance, numbers commencing 07 or +44 7) |
| ***Telephone Number (Mobile)*** | Pattern recognition of telephone format for mobile numbers as above |
| ***Email Address*** | Pattern recognition using @ symbol |

### Personal Profile (54)

- ***Objective: Method:***: To extract the personal profile where it is present. The personal profile comprises all text between the beginning and end of the section marker.
- **Skills (55) *Objective:***: To extract technology skills and the length of experience, where these are listed separately, outside of the Employment History.
- ***Method:***: At its simplest, technology skills can be placed in a single gazetteer. When matched, a simple pattern recognition process should address whether there is a "duration" (e.g. 2 yrs) following the skill. The duration of the units should be identified and converted to months. This skill and duration can then be extracted. As an alternative, the technology skills can be placed in multiple gazetteers with attributes indicating the "type" of skill. For instance, all Oracle skills can be placed together. In addition, where one skill set (e.g. Cascading Style Sheets - CSS) might imply a an additional skill (e.g. html), the attribute can contain all the implied skills.

### Qualifications (Academic/Vocational and Professional Memberships) (56)

- ***Objective:***: To extract the qualifications and determine the level of academic attainment.
- ***Method:***: *Academic Qualifications and Level of Attainment* All pertinent academic qualifications are collected and arranged in to multiple gazetteer lists and labelled in order of seniority. For example, the numbering might be as follows: n - Doctoral n+1 - Masters Degree n+2 - Graduate n+3 - Higher National n+4 - Ordinary National n+5 - ? n+6 - ? (where n is any integer). However, this numbering could equally be replaced by letters (A, B, C etc) The contents of each gazetteer list represents a similar level of attainment. For instance the Masters Gazetteer will include all representational forms of Masters Degree (e.g. MSc, MA, M Phil, Masters Degree etc). These can be expanded to include indicators of professional status that are not vocational qualifications (e.g. Chartered Engineer). Each gazetteer has an attribute to indicate that it contains academic qualifications and the number/label of the list (ie the level of attainment). Course name and University can be obtained by pattern matching around the degree type.
- ***Method:***: *Vocational Qualifications* Vocational qualifications are more numerous and prone to change. Rather than return an amorphous level of attainment, it is important to extract the name of the specific qualification. All pertinent vocational qualifications are collected in a single gazetteer list, labeled to indicate it contains vocational qualifications. When identified, the name of the vocational qualification is returned.
- ***Method:***: *Professional Memberships* Professional Memberships are undertaken in an identical manner to vocational qualifications.

### Job History - Company (multiple records) (57)

- ***Objective:***: For each consecutive record within the employment history segment, extract the start date, end date, organisation, job title,type and technological skills used during the period of employment.
- ***Method:***: Data is identified as follows:

| **Section** | **Method** |
|---|---|
| ***Start Date*** | Pattern recognition on date forms such as: |
| | 05/12/2007 or 05/12/07 or 05Dec2007 or Dec2007 etc |
| | Date should then extracted and converted in to format that can be used for comparing dates and calculating intervals between dates. |
| ***End Date*** | As above. End dates are usually expressed in the pattern: |
| | < start date > < end date > |
| | However for completeness, the end date can be tested to ensure it is later than the start date. |
| ***Job Type*** | Job Types (ie Permanent, Fixed Term, Contract) are held in multiple gazetteers (one per type). The gazetteer then contains all the likely synonyms and has a standardised attribute such as "Contract Employment" or "Permanent Employment" |
| | Job types need to be disambiguated to avoid examples such as: " I trained the permanent staff" |
| | Disambiguation can be achieved through checking that the possible job type in close proximity to the job title and dates. |
| ***Job Title*** | Job Titles are held in gazetteers and extracted when found. |
| | Job titles can be generalised as follows: |
| | General Job title = developer |
| | Job title pattern = < Job title Prefix >< IT Skill > < job title > will find "Senior Java developer" Job title Pre-fixes would be held in a gazetter and contain words such as "Senior", "Principal", "Chief", "Lead" etc) |
| ***Seniority*** | Job titles are arranged in multiple gazetteers by seniority. For instance these lists might be arranged as follows: |
| | • CEO Level (eg MD, President, Professor) |
| | • Director Level (eg IT Director, Head of..) |
| | • Senior Management Level |
| | • Junior Management Level |
| | • Supervisory Level (eg Team Leader) |
| | • Worker Level |
| | Judgement needs to be applied to the positioning of academic/technical specialists and project roles where it is less obvious where they fit in the heirachy. |
| ***Discipline*** | The same set of Job titles can be arranged in a second set of gazetteers but organised by discipline. For instance all HR roles could be grouped together in a HR group (eg Personnel Assistant, Training Manager etc). |
| ***Company Name*** | Company names can be contained within gazetteers but also inferred from words such as plc, limited, inc, incorporated, Itd etc |
| | Once identified, the company name is extracted |
| ***Branch Location*** | Often CVs will contain a geographic qualifier with the company name, indicating the branch location (eg: MajorCompany A, Swindon). The typical pattern is: |
| | < Company name > < location > |
| ***Industry Sector*** | Company names are held within multiple gazetteers one for each industry sector to be classified. When each company is matched with the gazetteer entry, the industry sector attribute is also extracted. |
| ***Technology Skills*** | Technology skills are matched against a gazetteer of technology skills. Each skill matched is held in a record and the duration (in months) of the employment is added to the record. Where a skill is matched across multiple Job History records, the durations are accumulated and the date last referenced is stored. |

### Competencies (58)

- ***Overview:***: To extract examples of competencies that might be relevant in a matching process. It is impossible to say whether the owner of a CV has a particular competence, however, it might be possible to illustrate examples (or evidence) of where a particular competence could have been demonstrated. Competences can be divided in to different types. For instance:

| **Competence Type** | **Examples and Notes** |
|---|---|
| ***Soft Skills*** | Usually refers to people oriented skills such as communication skills, ability to persuade etc |
| ***Work Style*** | Usually refers to the manner in which an individual undertakes their job, for instance, proactive, problem solver, team oriented, innovative etc |
| ***Task Oriented*** | Usually refers to the ability to undertake a particular task, for instance, lead a team, formulate strategy, monitor a budget |

### Work Style and Soft Skill Competencies

- ***Objective:***: To establish examples of Work Style or Soft Skills competence within the CV for a predefined range of competencies.
- ***Method:***: A list of competencies should be established and a gazetteer created for each one. The gazetteer has the name of the competence and type of competence as an attribute. Each gazetteer contains the synonyms (and stemmed forms) or descriptive phrases that indicate the competence. For instance:
- *Persuasion:*: Persuasion, persuasive, persuading, influences, effects, guides, promotes, argues, develops argument, build trust, identifies barriers
- *Leadership:*: Leads, led, delegates, delegated, vision, champions, set standards
- *Innovative:*: Develops, analyses, creates, new, novel, synthesis, conceptual
- *Analytical:*: Analyses, evaluates, determines, reviews, conceptualises
- *Flexibility:*: Adapts, improves, changes
- *Action Oriented:*: Targets, goals, results, increases, decreases, improves, reduces
- *Facilitates:*: Assists, aids, helps, engages
- *Develops Others:*: Coaches, mentors, delegates, trains
- *Communication:*: Presents, concepts, writes, discusses, communicates

Matched synonyms are disambiguated to ensure they are verbs and relate to the owner of the CV. Where a match is found, the name of the competence is recorded and the sentence containing the competence is extracted. The number of occurrences of a match in each competence is also counted.

### Task Competencies

- ***Objective:***: To establish examples of task competence within the CV for a predefined range of competencies.
- ***Method:***: A list of competencies should be established. Typically task competencies have a similar three part structure. For instance "Formulate Purchasing strategy" "Lead Design team" "Develop Operations budget" <verb> <business area> <noun>

In some instances the business area is omitted. A gazetteer should be created for each verb, containing all possible synonyms for the word and their stemmed form. Each gazetteer should have an attribute indicating its place in the verb, business function, noun trilogy and the generic name of the verb. For instance:

| **Task** | | **Task** | | **Task** |
|---|---|---|---|---|
| **Competence -** | | **Competence -** | | **Competence -** |
| **Verb** | | **Verb** | | **Verb** |
| **"Formulates"** | | **"Leads"** | | **"Monitors"** |
| Formulated | | Leads | | Monitors |
| Composed | | Manages | | Oversees |
| Prepared | | | | Reviews |

A similar set of gazetteers should be set up for Business Areas and Nouns. For instance:

| **Task** | | **Task** | | **Task** |
|---|---|---|---|---|
| **Competence -** | | **Competence -** | | **Competence -** |
| **Business Area** | | **Business Area** | | **Business Area** |
| **"HR"** | | **"Sales"** | | **"IT"** |
| HR | | Business | | IT |
| Human | | Development | | Information |
| Resources | | Sales | | Technology |
| Personnel | | | | IS |
| Training | | | | Information |
| | | | | Systems |

| **Task** | | **Task** | | **Task** |
|---|---|---|---|---|
| **Competence -** | | **Competence -** | | **Competence -** |
| **Noun** | | **Noun** | | **Noun** |
| **"Strategy"** | | **"Targets"** | | **"Budget"** |
| Strategy | | Targets | | Budget |
| Plan | | Objectives | | Budgets |
| Tactics | | Sales | | Cost |
| | | | | Costs |
| | | | | Financial plan |

When a phrase within the CV triggers adjacent matches across all three gazetteers (or two, if the business area is missing), the phrase/sentence is extracted, with the generic match. For example:
- **CV contains phrase:**: "Prepared IS financial plan"
- **Extracted phrase:**: "Prepared IS financial plan"
- **Generic match:**: <Formulates><IT><Budget>
**Project Examples (59)**
- ***Objective:***: To establish examples of projects undertaken within the Employment History
- ***Method:***: Instances of the word "Project" should be annotated as "possible" examples of project work. These examples should then be tested to ensure they the context is correct. For instance: • The word should not be in isolation (ie a heading) • The word should be part of a paragraph • Should be preceded by words or phrases such as: o Managed o Took part in o Undertook Where a match is found, the whole paragraph containing the match can be extracted.

### Job Advertisement Information Extraction Process Overview

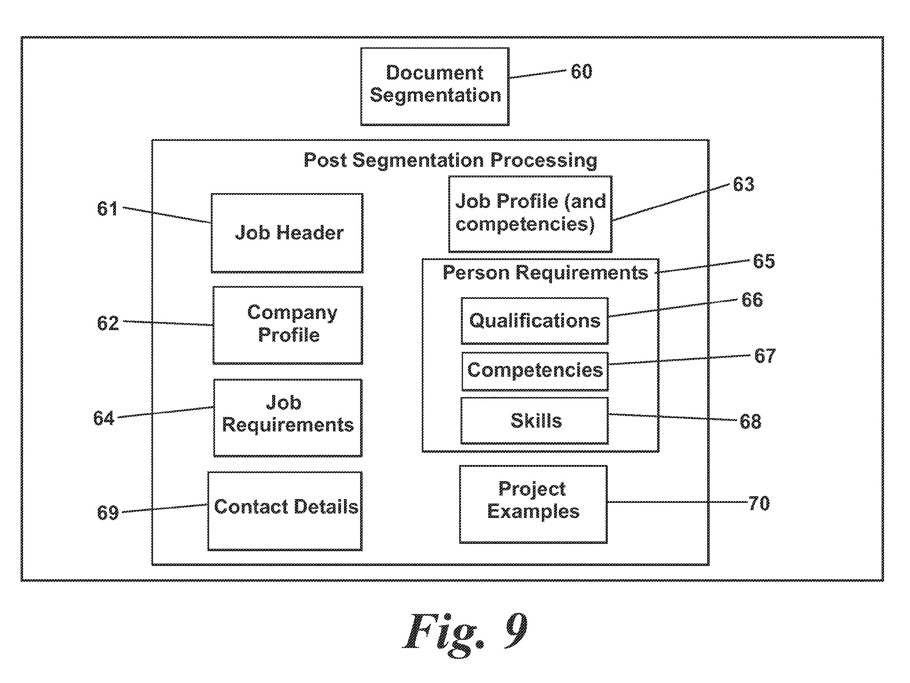

Processes for information extraction from the Job Advertisement are in principle identical to those in the CV. Figure 9 shows how extraction might take place with respect to a job advertisement. Segmentation is less effective for advertisements. The differences are as follows:

### Advertisement Segmentation (60)

- ***Objective:***: To segment the Job Advertisement in component sections to simplify the disambiguation task. These sections are: • Job Header • Company Profile • Job Profile (i.e. purpose or function of role) • Job Requirements (i.e. responsibilities of role) • Person Requirements • Contact Details
- ***Method:***: Gazetteers should be created for each section marker, with an attribute containing the name of the section marker. Each gazetteer then contains the synonyms for the marker. For instance:

| **Job Requirements** | **Person** |
|---|---|
| | **Requirements** |
| The position | The person |
| The Role | The candidate |
| Requirements of the post | Person specification |
| Key responsibilities | |

Advertisements are less likely to be labelled and can be ambiguously labelled, however there are still benefits in trying to detect labelled sections. Typically the steps are as follows:
- ***Step 1:***: Find the End of File marker and place annotation

- ***Step* 2:**: Use gazetteer for commonly used words denoting sections and annotate as "possible" section boundaries.
- ***Step* 3:**: Use gazetteer for ambiguous words and annotate as "possible" section boundaries.
- ***Step 4:***: Examine the "possible" section markers and detect whether these words stand alone (as if it is a heading) or whether they are surrounded by other words (as if it is part of a sentence). If alone, annotate the marker as a section marker of the type indicated by the gazetteer type.
- **Step 5:**: The data can now be extracted.
**Job Header (61)**
- ***Objective:***: To extract the company name, industry sector, job title, job reference, location, salary/rate and job type (i.e. permanent, fixed term or contract).
- ***Method:***: Data fields are detected as follows:

| **Section** | **Method** |
|---|---|
| ***Company Name*** | Company names are detected through named entity recognition and the company gazetteers used in CV. In an advertisement, it is most likely that there will only be one company referenced. However, where there are several organisations listed they can be disambiguated by looking for references to customers or suppliers or IT skills (e.g. Oracle) |
| ***Industry Sector*** | As CV |
| ***Job Title*** | As CV |
| ***Job Reference*** | Job references are usually preceded with a label. Job reference labels and synonyms should be held in a gazetteer and annotated when found. |
| ***Location*** | Job locations can be less precise than those found in CVs. This typically comprises a "grouped" location such as: |
| | "South West", "South", "Midlands", "Scotland", "Home Counties" |
| | Multiple gazetteers should be created, one per instance of a grouped location. The attribute for that gazetteer should then include a list of the postal areas (i.e. the first two digits of the postcode) |
| | Job locations will be found through a combination of approaches: |
| | • Labels (as in the job reference) |
| | • Named entity recognition |
| | • Gazetteers (ie grouped locations) |
| | Where a single location is found, it is extracted as found. |
| | Where a "grouped" location is found, the postal areas encompassed by the group can be substituted. |
| ***Salary***/ ***Rate*** | Named entity recognition based upon symbols of monetary value eg £ of $. |
| | Additional disambiguation can be used Pattern recognition for hourly rated work using patterns such as: |
| | £xx/hr or £xx/hour |
| ***Salary Units*** | Gazetteers should be created for the most common salary units (e.g. "hourly rates" and annual rates"). The gazetteer should contain the standard synonyms for each. For instance: |
| | ***Attribute:*** Hour |
| | ***Contains:*** "/hr" and "/hour" and "per hour" and "ph" etc |
| | The salary unit as an attribute. When matched, the salary unit should be extracted from the attribute. |
| ***Job Type*** | As CV |

**Company Profile (62)**
- ***Objective:***: To extract the Company Profile where it is present, though this does not typically contain information that can be directly used in the matching process.
- ***Method:***: The Company Profile comprises all text between the beginning and end of the section marker.
**Job Profile (63)**
- ***Objective:***: To extract the Job Profile and expressed task competencies where present.
- ***Method:***: The Job Profile comprises all text between the beginning and end of the section marker. The Job Profile can also contain descriptions of the task competencies needed in the role. These task competences may or may not be expressed explicitly in the Job Requirements. For instance, the Job Profile may state the role will involve "leading a team", whilst the Job Requirement may state the organisation is looking for "an experienced manager". It is important to include in each gazetteer, the synonyms for the tenses used in advertisements. For instance, a CV might state: "developed a product", whereas an advertisement might state "will develop a product" or "developing a product" These task competences can be extracted in the same manner as those in CVs.
**Job Requirements (64)**
- ***Objective:***: To extract the job requirements text and specific job requirements.
- ***Method:***: Job requirements will comprise a mixture of Technology Skills, Qualifications and Task Competencies. These can be identified and extracted as they are for CVs. The full Job Requirements information comprises all text between the beginning and end of the section marker. **Person Requirements (65)**
***Objective:*** To extract the Person Requirements, Qualifications (ie Academic, Vocational, Professional Memberships (66)), competencies (67) and technology skills (68) for the role, where present. ***Method:*** The Person Requirement comprises all text between the beginning and end of the section marker. Academic, Vocational, Professional Membership, competencies and skills can be identified and extracted as undertaken in CVs. **Contact Details (69)**
***Objective:*** To extract the name, address, telephone numbers and email address.
***Method:*** Data fields are detected as undertaken with CVs. **Project Examples (70)**
***Objective:*** To establish examples of projects required in role.
***Method:*** Instances of the word "Project" should be annotated as "possible" project work. These examples should then be tested to ensure they the context is correct. For instance: • The word should not be in isolation (ie a heading) • The word should be part of a paragraph • Should be preceded by words or phrases such as: o Manage o Undertake

Where a match is found, the whole paragraph containing the match can be extracted.

## Claims

1. A method of creating a database comprising
• receiving a document file comprising a curriculum vitae or a job advertisement,
• performing semantic extraction on the document file, extracting a plurality of components from the document file,
• accessing a data matrix, the data matrix defining a plurality of standardised entries,
• translating each extracted component into a standardised entry from the data matrix, and
• storing the translated standardised entries in a data file.

2. A method according to claim 1, and further comprising extracting a location component from the document file and storing the location component in the data file.

3. A method according to claim 1, and further comprising matching at least one of the standardised entries of a first data file to at least one of the standardised entries of a second data file.

4. A method according to claims 2 and 3, and further comprising matching the location component of the first data file to the location component of the second data file.

5. A method according to claim 1, 2 or 3, and further comprising receiving a user input corresponding to a standardised entry in the data matrix and displaying one or more representations of data files that include the received standardised entry.

6. A method according to claim 5, and further comprising receiving a second user input corresponding to a location component, and displaying one or more representations of data files that include the received location component.

7. A system for creating a database comprising
• an interface arranged to receive a document file comprising a curriculum vitae or a job advertisement,
• a processor arranged to perform semantic extraction on the document file, extracting a plurality of components from the document file, to access a data matrix, the data matrix defining a plurality of standardised entries, and to translate each extracted component into a standardised entry from the data matrix, and
• a database arranged to store the translated standardised entries in a data file.

8. A system according to claim 7, wherein the processor is further arranged to extract a location component from the document file and to store the location component in the data file.

9. A system according to claim 7, wherein the processor is further arranged to match at least one of the standardised entries of a first data file to at least one of the standardised entries of a second data file.

10. A system according to claims 8 and 9, wherein the processor is further arranged to match the location component of the first data file to the location component of the second data file.

11. A computer program product on a computer readable medium for creating a database, the product comprising instructions for:
• receiving a document file comprising a curriculum vitae or a job advertisement,
• performing semantic extraction on the document file, extracting a plurality of components from the document file,
• accessing a data matrix, the data matrix defining a plurality of standardised entries,
• translating each extracted component into a standardised entry from the data matrix, and
• storing the translated standardised entries in a data file.

12. A computer program product according to claim 11, and further comprising instructions for extracting a location component from the document file and for storing the location component in the data file.

13. A computer program product according to claim 11, and further comprising instructions for matching at least one of the standardised entries of a first data file to at least one of the standardised entries of a second data file.

14. A computer program product according to claims 12 and 13, and further comprising instructions for matching the location component of the first data file to the location component of the second data file.
